# EUROPEAN PATENT SPECIFICATION

(11) **EP 0 452 860 B1**
(45) Date of publication and mention of the grant of the patent: **11.09.1996**
(21) Application number: 91105991.3
(22) Date of filing: 15.04.1991
(51) Int. Cl.: H04N 1/00

(54) **Facsimile apparatus comprising cordless telephone set**
Faksimile-Gerät mit schnurlosem Telephon
Appareil fac-similé contenant une installation téléphonique sans fil

(30) Priority: 18.04.1990 JP 104190/90
(43) Date of publication of application: 23.10.1991
(73) Proprietor: SHARP KABUSHIKI KAISHA, Osaka 545 (JP)
(72) Inventor: Hayashi, Motohiko, Yamatokoriyama-shi, Nara-ken (JP)
(74) Representative: TER MEER - MÜLLER - STEINMEISTER & PARTNER

(56) References cited:
- EP-A- 0 328 069
- EP-A- 0 347 622
- EP-A- 0 417 788
- DE-A- 3 508 267

## Description

### BACKGROUND OF THE INVENTION

### Field of the Invention

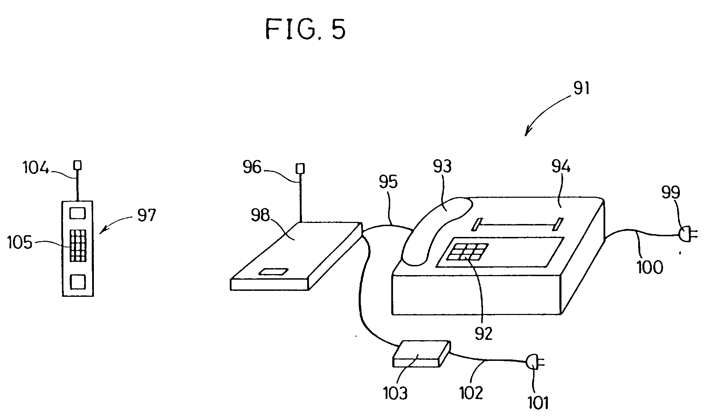

The present invention relates to a facsimile apparatus in accordance with the precharacterizing part of claim 1. Such a known facsimile apparatus is hereunder described in relation to Fig. 5.

### Description of the Background Art

In accordance with the recent spread of facsimile apparatus and cordless telephones, a facsimile apparatus incorporating a cordless telephone has been developed. Fig. 5 is a schematic illustration of a conventional facsimile apparatus 91 incorporating a cordless telephone set.

Referring to Fig. 5, a conventional facsimile apparatus 91 incorporating a cordless telephone set is constituted by a main body 94 comprising a panel 92 for entering telephone numbers and a handset 93, and a base unit 98 connected to main body 94 by a cable 95 for sending/receiving aural signals by radio to/from a remote unit 97 via an antenna 96.

The main body 94 is applied with commercial AC power, for example via a power supply cord 100 having a plug 99. Base unit 98 is applied with AC power without noise removed via an AC adapter 103 having a power supply cord 102 with a plug 101. Remote unit 97 is provided with an antenna 104 and an operation panel 105 for entering telephone numbers and the like. Remote unit 97 has the function to serve as a handset.

In a conventional facsimile apparatus 91, power is applied separately to main body 94 and base unit 98. Therefore, a power supply circuit such as a regulator is required respectively in both main body 94 and base unit 98. Base unit 98 is provided with AC adaptor 103. If two separate power supplies are not provided, and common power is divided from one power supply line to be applied to main body 94 and base unit 98, noise such as hum of clock pulses of main body 94 enters base unit 98. This results in the deterioration of the quality of aural signals at the time of talking.

Power was applied to main body 94 and base unit 98 separately to prevent such disadvantages. However, this requires the provision of a power supply circuit respectively in main body 94 and base unit 98, resulting in the number of necessary components, an AC adaptor 103 for example, being increased. This is responsible for the increase in size and complexity of the apparatus.

### SUMMARY OF THE INVENTION

In view of the foregoing, an object of the present invention is to improve the quality of aural signals A at the time of talking with a simple structure in a facsimile apparatus comprising telephone function.

Another object of the present invention is to reduce the size of a facsimile apparatus comprising telephone function without deteriorating the quality of aural signals.

A further object of the present invention is to simplify the structure of a facsimile apparatus comprising telephone function without deteriorating the quality of aural signals.

A still further object of the present invention is to allow stable operation of a facsimile apparatus comprising telephone function without deteriorating the quality of aural signals.

The above objects of the present invention are achieved with a facsimile apparatus comprising the following elements. A facsimile apparatus according to the present invention includes a first communicating device for transmitting and receiving an aural signal via a telephone line, a second communicating device for transmitting and receiving an image signal via the telephone line, and a power supplying device for receiving a single AC power supply and supplying separate first and second power supplies electrically insulated from each other to the first and second communicating devices.

The present facsimile apparatus is characterized in that said insulated first and second power supplies are provided in conjunction with an insulation circuit for interconnecting the second communication means with a Base unit of a cordless telephone set as defined in claim 1.

Depending claims 2 to 6 are respectively characterizing advantageous developments thereof.

The first and second communicating devices are supplied with power supplies electrically insulated from each other from a single input power supply by a power supplying device. As a result, it is possible to reduce the size of a facsimile apparatus having telephone function without deteriorating the quality of aural signals.

The power supplying device preferably comprises a transformer for providing to the output side power insulated electrically from the input side and generated by induction electromotive force. Because the power supplying device comprises a transformer, the structure of a facsimile apparatus comprising telephone function is simplified without deteriorating the quality of aural signals.

The power supplying device preferably comprises a feedback device to monitor output voltages from a first power supply and a second power supply for feeding back a feedback signal to the power supplying device when the output voltages are a value other than predetermined values. Because the power supplying device comprises a feedback device, the output voltage is stabilized with no defect due to fluctuation of the output voltage. As a result, stable operation in a facsimile apparatus comprising telephone function is possible.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram schematically showing a facsimile apparatus comprising a cordless telephone set according to the present invention.

Fig. 2 is a block diagram showing in detail a base unit and a main body constituted by a facsimile communication portion of the facsimile apparatus comprising telephone function according to the present invention.

Fig. 3 is a block diagram of a power supply circuit of Fig. 2.

Fig. 4 is a schematic illustration of a facsimile apparatus comprising telephone function according to the present invention.

Fig. 5 is a schematic illustration of a conventional facsimile apparatus comprising a cordless telephone set.

### DESCRIPTION OF THE PREFERRED EMBODIMENTS

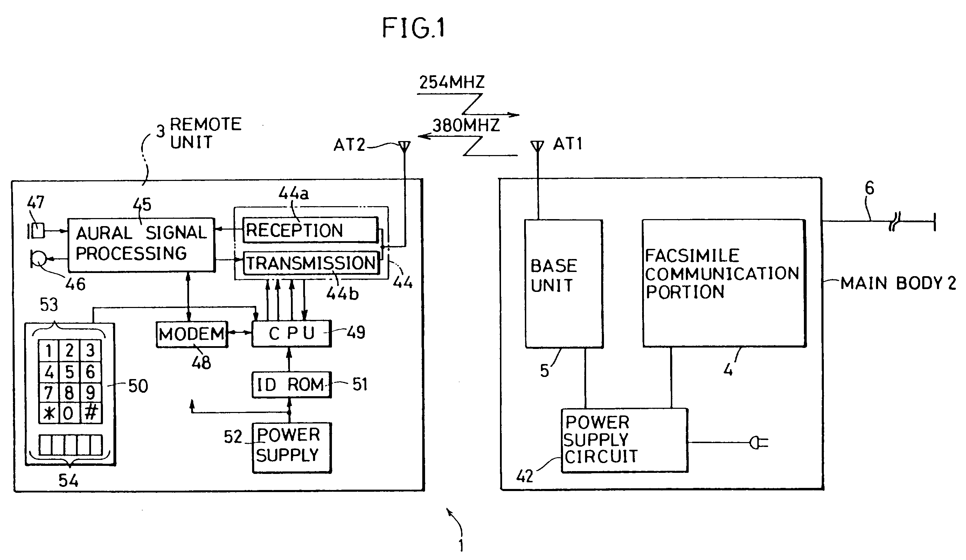

Referring to Fig. 1, a facsimile apparatus 1 having a cordless telephone set according to the present invention comprises a main body 2 connected to a telephone line 6, and a remote unit 3 connected to main body 2 by radio communication. Main body 2 comprises a facsimile communication portion 4, a base unit 5 connected to remote unit 3 by radio communication, and a power supply circuit 42 for providing power supply to facsimile communication portion 4 and base unit 5.

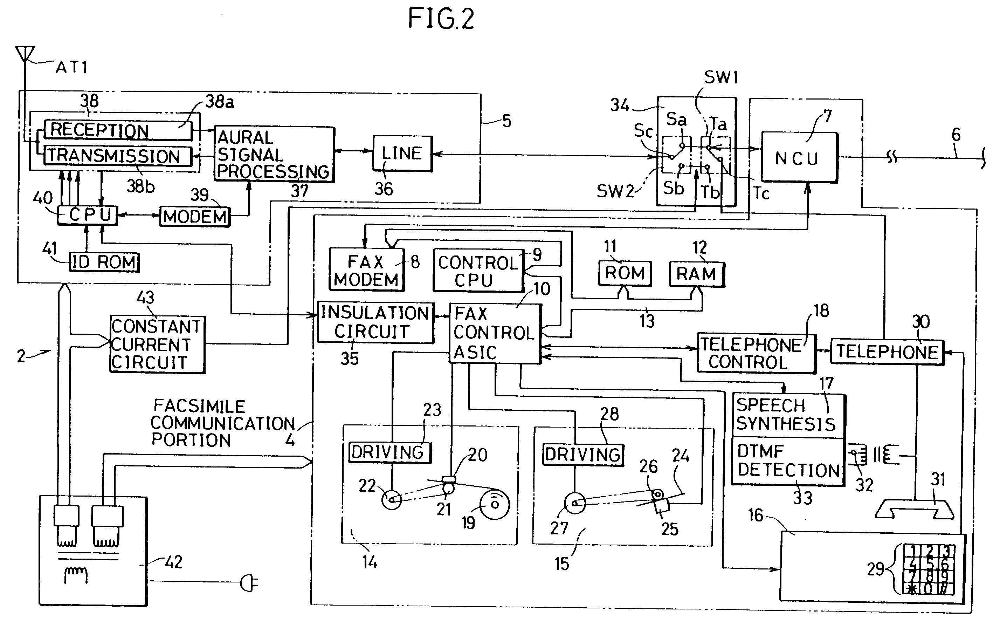

The structure and the operation of main body 2 according to the present invention will be explained hereinafter with reference to Fig. 2. Referring to Fig. 2, telephone line 6 is connected to an NCU (Network Control Unit) of facsimile communication portion 4. NCU 7 comprises a CML (Connect Modem to Line) relay for a terminating signal detecting circuit (not shown) to connect a FAX modem 8 to telephone line 6. NCU 7 supplies the signal received via telephone line 6 to FAX modem 8. FAX modem 8, a control CPU 9, a FAX control ASIC 10 controlling the entire facsimile apparatus, a ROM 11 and a RAM 12 are interconnected by a data bus 13. Control CPU 9 identifies the signal from FAX modem 8 to control FAX control ASIC 10. FAX control ASIC 10 controls a recording device 14, a reading device 15, an operation panel 16, a speech synthesis circuit 17, and a telephone control portion 18 according to the output of control CPU 9. Programs required for various control are stored in ROM 11. Data used at the time of various processing operation are stored in RAM 12. A work area is also set in RAM.

Recording device 14 records the received image data on a record sheet 19. A record head 20 is pressed against a roller 21 with record sheet 19 therebetween. Record sheet 19 is recorded according to a recording signal from FAX control ASIC 10. Roller 21 is rotated by a motor 22, whereby record sheet 19 is forwarded in synchronism with the recording speed of record head 20. A driving circuit 23 controls motor 22 according to a control signal from FAX control ASIC 10.

Reading device 15 optically reads the original image of an original 24. Original 24 is pressed against a reading sensor 25 such as a CCD (Charge Coupled Device) by a roller 26. Roller 26 is rotated by driving a motor 27, whereby original 24 is forwarded to be read by reading sensor 25. A driving circuit 28 controls motor 27 according to a control signal from FAX control ASIC 10.

Operation panel 16 comprises a ten-key 29. A PB (Push Button) signal generated by operating ten-key 29 is supplied to a telephone portion 30. Telephone portion 30 carries out the calling operation according to the PB signal from operation panel 16. Telephone portion 30 is provided with a handset 31 for talking. A speech synthesis circuit 17 and a DTMF detector 33 are connected between telephone portion 30 and handset 31 via a transformer 32. DTMF (Dual Tone Multi Frequency) is a signal of a combination of particular frequencies indicating the numeric values of a telephone number, the priority rank, or the end of a signal.

Various aural messages synthesized by speech synthesis circuit 17 are provided to an external line or a remote unit 3 from the speaker of handset 31 and through telephone portion 30. DTMF detector 33 detects a DP signal or a PB signal received by telephone portion 30 to provide that signal to FAX control ASIC 10. Telephone portion 30 is controlled by a telephone control portion 18.

FAX control ASIC 10 carries out transmission/reception of a signal to or from base unit 5 via an insulation circuit 35 such as a photocoupler.

An internal/external line switcher 34 carries out the switching of an internal line and an external line among base unit 5, telephone line 6 and telephone portion 30. Internal/external line switcher 34 comprises switches SW1 and SW2.

Terminal Ta of switch SW1 is connected to terminal Sa of switch SW2. Terminal Tb of switch SW1 is connected to terminal Sb of switch SW2. Switch SW1 has terminal Ta connected to NCU 7, and terminal Tc connected to telephone portion 30. Base unit 5 is connected to terminal Sc of switch SW2. Base unit 5 and telephone portion 30 are capable of communication with the external line by connecting terminal Ta to terminal Tc in switch SW1, and terminal Sa to terminal Sc in switch SW2. Telephone portion 30 is capable of communication with the external line by connecting terminal Tb to Tc in switch SW1. Internal line communication is capable between base unit 5 and telephone portion 30 by connecting terminal Tb to terminal Tc in switch SW1 and terminal Sb to terminal Sc in switch SW2.

The structure of base unit 5 will be explained hereinafter. A line circuit 36 is connected to terminal Sc of internal/external line switcher 34. Line circuit 36 is provided with a speech network for controlling the transmission and reception of an aural signal through the handset, and a dialer to generate a DT signal or a PB signal for calling the telephone set of the called side. An aural signal processing circuit 37 is connected to line circuit 36. Aural signal processing circuit 37 comprises a limiter for controlling the amplitude value of the voltage and a compounder (a compressor circuit and an expander circuit) for compressing/expanding an aural signal. The processing of aural signals received via line circuit 36 and transmission/reception circuit 38 are carried out in aural signal processing circuit 37. The received control signal is supplied to a CPU 40 via a modem 39.

CPU 40 controls base unit 5 and remote unit 3 according to a control signal provided via a modem 39, a control signal provided from transmission/reception circuit 38, and a control signal provided from FAX control ASIC 10 via insulation circuit 35.

An IDROM 41 is stored with ID (identification) codes for each cordless telephone set specified by the Minister of Posts and Telecommunications. At the time of connection of radio line, an ID code is transmitted to remote unit 3, whereby the ID code is verified so that signals are not sent to other remote units.

Transmission/reception circuit 38 comprises a receiving circuit 38a and a transmitting circuit 38b. Receiving circuit 38a demodulates a reception signal received by antenna AT1 to provide that signal to aural signal processing circuit 37 and CPU 40. Transmitting circuit 38b modulates/demodulates a signal provided from aural signal processing circuit 37 and CPU 40 to transmit a signal to a remote unit from antenna AT1 at a frequency of, for example, 380MHz (refer to Fig. 1).

Main body 2 and base unit 5 of facsimile apparatus 1 are provided with power from power supply circuit 42. Power from power supply circuit 42 is also supplied to a constant current circuit 43. Constant current circuit 43 supplies the direct constant current to internal/external line switcher 34 to provide direct current to the communication path for internal line talking.

The structure of remote unit 3 will be explained hereinafter with reference to Fig. 1. The reception signal received by an antenna AT2 is supplied to a receiving circuit 44a of transmission/reception circuit 44 and is demodulated. The aural signal is supplied to aural signal processing circuit 45. The control signal is supplied to a CPU 49. A transmitting circuit 44b modulates the aural signal and the control signal from aural signal processing circuit 45 and CPU 49 to send the signal from antenna AT2 to base unit 5 at, for example, 254MHz. CPU 49 controls remote unit 3 according to the control signal from receiving circuit 44a, the control signal supplied via modem 48, and key pulses from operation panel 50.

ID codes for each cordless telephone set specified by the Minister of Posts and Telecommunications are stored in an IDROM 51. At the time of connection of radio line, an ID code is transmitted to base unit 5 to verify the ID code.

Aural signal processing circuit 45 processes an aural signal from transmission/reception circuit 44 and a control signal from CPU 49 via modem 48 to provide these signals from a telephone transmitter 46. Aural signal processing circuit 45 processes the aural signal from a telephone receiver 47 to provide that signal to transmitting circuit 44b of transmission/reception circuit 44. Operation panel 50 comprises a ten-key 53 and a mode specifying key 54. Each key has a separate frequency signal which is supplied to CPU 49. Remote unit 3 is power supplied by a power supply 52.

The detail structure and operation of the cordless telephone is described in US-A-4,881,259.

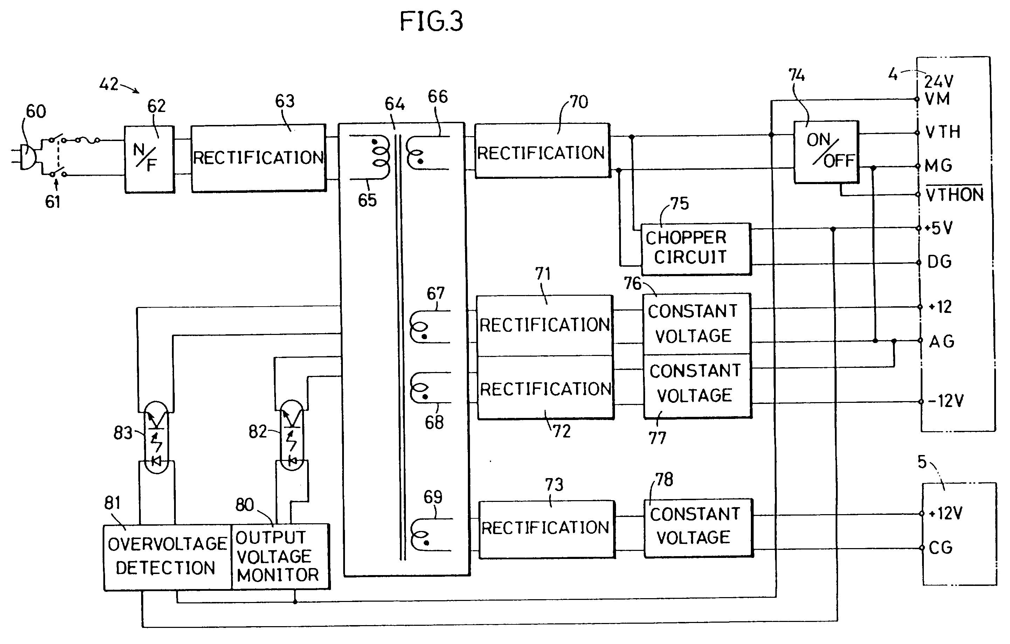

The structure of power supply circuit 42 of main body 2 will be explained hereinafter with reference to Fig. 3. In power supply circuit 62, commercial AC voltage from a plug 60 via a power supply switch 61 is applied to an inverter circuit 64 such as a transformer via an N/F (noise filter) circuit 62 and a rectification circuit 63. Inverter circuit 64 is provided with an input side winding 65 and output side windings 66 - 69. Each of output side windings 66 - 69 is electrically insulated from input side winding 65. Induction electromotive force induced by AC current in input side winding 65 is provided to rectification circuits 70 - 73.

Facsimile communication portion 4 is applied with the output voltage via rectification circuit 70 and an ON/OFF circuit 74, the output voltage via rectification circuit 70 and a chopper circuit 75, and a constant voltage obtained via rectification circuits 71 and 72 and constant voltage circuits 76 and 77. Base unit 5 is applied with a constant voltage obtained via rectification circuit 73 and a constant voltage circuit 78.

The voltage applied to facsimile communication portion 4 is provided, for example, to the mechanical portion via terminal VM, and to a thermal head via terminal VTH. The voltage applied from power supply circuit 42 to base unit 5 is provided, for example, to the cordless telephone side via terminal CG as the ground voltage.

The output voltages of rectification circuit 70 and chopper circuit 75 are applied to an output voltage monitoring circuit 80 and an overvoltage detecting circuit 81, whereby these outputs are applied to inverter circuit 64 via photocouplers 82 and 83.

In accordance with the present embodiment, the power supplies provided to facsimile communication portion 4 and base unit 5 are obtained from output side windings 66 - 68 and output side winding 69 and, therefore, are electrically insulated from each other. Noise due to hum and clock pulses generated at facsimile communication portion 4 will not enter base unit 5. Furthermore, noise is not mixed into the speech communication through base unit 5 or through remote unit 3 via base unit 5. As a result, the quality of aural signals at the of time talking can be improved even though only a single input voltage terminal is provided. The apparatus may be reduced in size owing to the provision of only a single input voltage terminal.

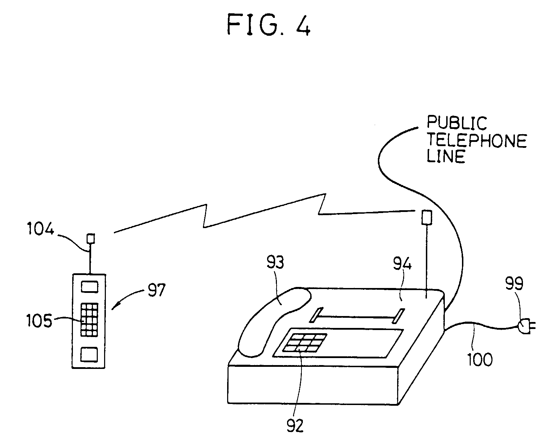

The schematic illustration of the apparatus according to the present invention is shown in Fig. 4.

Although the present invention has been described and illustrated in detail, it is clearly understood that the same is by way of illustration and example only and is not to be taken by way of limitation, the scope of the present invention being limited only by the terms of the appended claims.

## Claims

1. A facsimile apparatus comprising:
first communication means (5) for transmitting and receiving an aural signal via a telephone line (6), and comprising a cordless telephone set with a base unit,
second communication means (4) for transmitting and receiving an image signal via said telephone line, and
power supplying means (42) to receive a single AC power supply for providing first and second power supplies electrically insulated from each other to said first and second communication means, characterized in that
said insulated first and second power supplies are provided in conjunction with an insulation circuit (35) for interconnecting the second communication means (4) with said base unit (5) of said cordless telephone set (1), such as to pass signals between said second communication means and said base unit, and to electrically insulate said second communication means from said base unit.

2. The facsimile apparatus according to claim 1, wherein said power supplying means comprises a transformator (64) for providing power electrically insulated from an input side (65) and generated by induction electromotive force to an output side (66 to 69).

3. The facsimile apparatus according to claim 2, wherein
said first power supply is generated using a first coil (66),
said second power supply is generated using a second coil (67, 68),
said first and second coils are implemented to prevent transmission of noise between each other.

4. The facsimile apparatus according to claim 1, further comprising adjusting means (80-83) to monitor output voltages from said first power supply and said second power supply for adjusting said output voltages to predetermined values.

5. The facsimile apparatus according to claim 4, wherein said adjusting means comprises output voltage insulating means (82, 83) for insulating said output voltages from an input voltage of said power supplying means.

6. The facsimile apparatus according to claim 1, wherein said second communication means (4), said insulated first and second power supplies, said insulation circuit (35) and said base unit (5) are housed together in a main body (2).

## Patentansprüche

1. Faksimilegerät mit:
einer ersten, mit einem schnurlosen Telefon und einer Basiseinheit ausgestatteten Kommunikationseinrichtung (5) zur Übertragung und zum Empfang eines akustischen Signals über eine Telefonleitung (6),
einer zweiten Kommunikationseinrichtung (4) zur Übertragung und zum Empfang eines Bildsignals über die Telefonleitung, und
einer Energieversorgungseinrichtung (42), die über eine einzige Zuleitung Wechselstrom erhält und erste und zweite gegeneinander elektrisch isolierte Energieversorgungen für die erste und die zweite Kommunikationseinrichtung speist, **dadurch gekennzeichnet**, daß
die ersten und zweiten Energieversorgungen über einen Trennkreis (35) gekoppelt sind, um die zweite Kommunikationseinrichtung (4) mit der Basiseinheit (5) des schnurlosen Telefons (1) so zu verbinden, daß Signale zwischen der zweiten Kommunikationseinrichtung und der Basiseinheit weitergegeben werden, wobei die zweite Kommunikationseinheit von der Basiseinheit galvanisch getrennt ist.

2. Faksimilegerät gemäß Anspruch 1, bei dem die Energieversorgungseinrichtung einen Transformator (64) aufweist zur galvanisch getrennten Versorgung einer Sekundärseite (66-69) von einer Primärseite (65) aus.

3. Faksimilegerät gemäß Anspruch 2, bei dem die erste Energieversorgung über eine Primärwicklung (66) und die zweite Energieversorgung über eine Sekundärwicklung (67, 68) ohne Rauschsignalkopplung von der Primär- zur Sekundärseite erfolgt.

4. Faksimilegerät gemäß Anspruch 1, weiterhin mit einer Justiereinrichtung (80-83) zur Einstellung der von der ersten und zweiten Energieversorgung abgegebenen Spannungen und zur Justierung der jeweiligen Ausgangsspannungen auf bestimmte Werte.

5. Faksimilegerät gemäß Anspruch 4, worin die Justiereinrichtung eine Ausgangsspannungsisolation (82, 83) aufweist, die die Ausgangsspannungen gegen die Eingangsspannung der Energieversorgung isoliert.

6. Faksimilegerät gemäß Anspruch 1, bei dem die zweite Kommunikationseinrichtung (4), die isolierten ersten und zweiten Energieversorgungen, der Isolationskreis (35) und die Basiseinheit (5) zusammen auf einem Chassis (2) montiert sind.

## Revendications

1. Appareil de fac-similé comprenant :
des premiers moyens de communication (5) pour émettre et recevoir un signal acoustique par l'intermédiaire d'une ligne téléphonique (6), et comprenant un appareil téléphonique sans fil comportant une unité de base,
des seconds moyens de communication (4) pour émettre et recevoir un signal d'image par l'intermédiaire de ladite ligne téléphonique, et
des moyens d'alimentation en énergie (42) pour recevoir une seule alimentation en énergie à courant alternatif pour fournir des première et seconde alimentations en énergie, électriquement isolées l'une de l'autre, auxdits premiers et seconds moyens de communication, caractérisé en ce que
lesdites première et seconde alimentations en énergie isolées sont fournies en liaison avec un circuit isolant (35), servant à interconnecter les seconds moyens de communication (4) à ladite unité de base (5) dudit appareil téléphonique sans fil (1), de manière à transmettre des signaux entre lesdits seconds moyens de communication et ladite unité de base et à isoler électriquement lesdits seconds moyens de communication par rapport à ladite unité de base.

2. Appareil de fac-similé selon la revendication 1, dans lequel lesdits moyens d'alimentation en énergie comprennent un transformateur (64) pour délivrer une énergie isolée électriquement par rapport à un côté entrée (65) et produite par une force électromotrice d'induction en direction d'un côté sortie (66 à 69).

3. Appareil de fac-similé selon la revendication 2, dans lequel
ladite première alimentation en énergie est produite en utilisant une première bobine (66),
ladite seconde alimentation en énergie est produite en utilisant une seconde bobine (67,68),
lesdites première et seconde bobines sont agencées de manière à empêcher la transmission de bruits entre elles.

4. Appareil de fac-similé selon la revendication 1, comprenant en outre des moyens de réglage (80-83) pour contrôler des tensions de sortie délivrées par ladite première source d'alimentation et ladite seconde source d'alimentation pour régler lesdites tensions de sortie à des valeurs prédéterminées.

5. Appareil de fac-similé selon la revendication 4, dans lequel lesdits moyens d'ajustement comprennent des moyens (82,83) d'isolation des tensions de sortie, servant à isoler lesdites tensions de sortie par rapport à une tension d'entrée desdits moyens d'alimentation en énergie.

6. Appareil de fac-similé selon la revendication 1, dans lequel lesdits seconds moyens de communication (4), lesdites première et seconde sources d'alimentation isolées, ledit circuit d'isolation (35) et ladite unité de base (5) sont logés conjointement dans un corps principal (2).
